# EUROPÄISCHE PATENTSCHRIFT

(11) **EP 1 288 953 B1**
(45) Veröffentlichungstag und Bekanntmachung des Hinweises auf die Patenterteilung: **17.11.2004**
(21) Anmeldenummer: 01119660.7
(22) Anmeldetag: 22.08.2001
(51) Int. Cl.: G11B 33/04, G11B 23/40, B65B 5/02

(54) **CD-Hülle**
CD cover
Enveloppe pour CD

(43) Veröffentlichungstag der Anmeldung: 05.03.2003
(73) Patentinhaber: Celfa AG, 6423 Seewen (CH)
(72) Erfinder: Niggli, Paul, 6443 Morschach (CH)
(74) Vertreter: Blum, Rudolf Emil Ernst

(56) Entgegenhaltungen:
- WO-A-00/13183
- DE-U- 9 419 178
- US-A- 5 348 216
- US-A- 5 789 051
- US-A- 6 155 026

## Beschreibung

Die vorliegende Erfindung betrifft einen beschrift- und/oder bedruckbaren Zuschnittbogen mit einem heraustrennbaren Zuschnitt, wobei der Zuschnitt nach Heraustrennen die Herstellung einer Hülle für digitale Datenträger wie Floppy Discs, CDs, DVDs etc., ermöglicht, insbesondere einen Zuschnittbogen, der mittels Transferverfahren resp. Transfertechnologien für digitale Daten, wie Laser-Beschriftung und insbesondere Ink-jet-Drucker, aber auch mittels analog und digital arbeitenden Kopierern und Druckmaschinen, beschreibbar resp. bedruckbar ist.

Leere Datenträger für das individuelle Abspeichern von Daten werden heute aus ökonomischen und ökologischen Gründen oft in Gebinden, die mehrere solche leeren Datenträger umfassen, angeboten. Für den Versand von Floppy Discs sind Schutzhüllen aus mit einer Polsterung versehenem Karton bekannt. Diese sind aber - falls überhaupt - nur von Hand beschriftbar, so dass der Inhalt solcher Hüllen primär nur durch direkte Kennzeichnung des Datenträgers selbst festgehalten werden kann. Zudem sind solche Hüllen sperrig, so dass sie sich schlecht als Hülle für die Archivierung solcher Discs eignen.

WO 00/13183 beschreibt einen Zuschnittbogen, in dem individuell bedruck- und heraustrennbare J-förmig faltbare Einlageblätter für Kassetten enthalten sind. US 5,348,216 offenbart Zuschnittbogen mit bedruckbaren Diskettenhüllen, die ebenfalls heraustrennbar im Zuschnittbogen gehalten werden. Die Hüllen können zu einer Tasche geformt werden. Sie werden vorzugsweise aus einem Laminat mit selbstklebender Schicht hergestellt.

Ziel der vorliegenden Erfindung war es deshalb eine individuell gestalt- und beschriftbare Hülle für individuell beschriebene Datenträger bereitzustellen.

Dieses Ziel wurde erreicht durch einen Zuschnittbogen, der mittels eines für den Transfer digitaler Daten geeigneten Druckers oder mittels eines Kopierers individuell bedruck- und beschriftbar ist, wobei dieser eine für den gewählten Drucker verarbeitbare Fläche und mindestens zwei von Hand heraustrennbare Zuschnittteile mit je einem Hauptabschnitt aufweist, wobei die Zuschnittteile mittels einer Trennlinie, insbesondere einer Perforation, heraustrennbar im Zuschnittbogen gehalten werden und wobei jeweils zwei Zuschnittteile miteinander einen heraustrennbaren Zuschnitt ergeben und wobei beide Hauptabschnitte im wesentlichen gleich gross sind und jeder der Hauptabschnitte mindestens die für eine Seite der Hülle für digitale Datenträger erforderlichen Masse aufweist, und wobei die zwei heraustrennbaren Zuschnittteile, die einen heraustrennbaren Zuschnitt ergeben, über mindestens eine Faltlinie zwischen den beiden Hauptabschnitten miteinander verbunden sind, und wobei mindestens ein erster Hauptabschnitt an mindestens einer Aussenkante mindestens einen zur Verbindung mit dem zweiten Hauptabschnitt bestimmten Lappen und oder Verschlusslappen aufweist; dadurch gekennzeichnet, dass mindestens einer der Lappen oder Verschlusslappen an mindestens einer Aussenkante mindestens eines ersten Hauptabschnitts mindestens teilweise als Einstecklasche ausgebildet ist und dass der zweite Hauptabschnitt mindestens einen zur Aufnahme der Einstecklasche dienenden Einsteckschlitz oder eine die werkzeuglose Herstellung eines Einsteckschlitzes ermöglichende Perforation aufweist.

Die Erfindung wird nun anhand der Figuren näher erläutert.

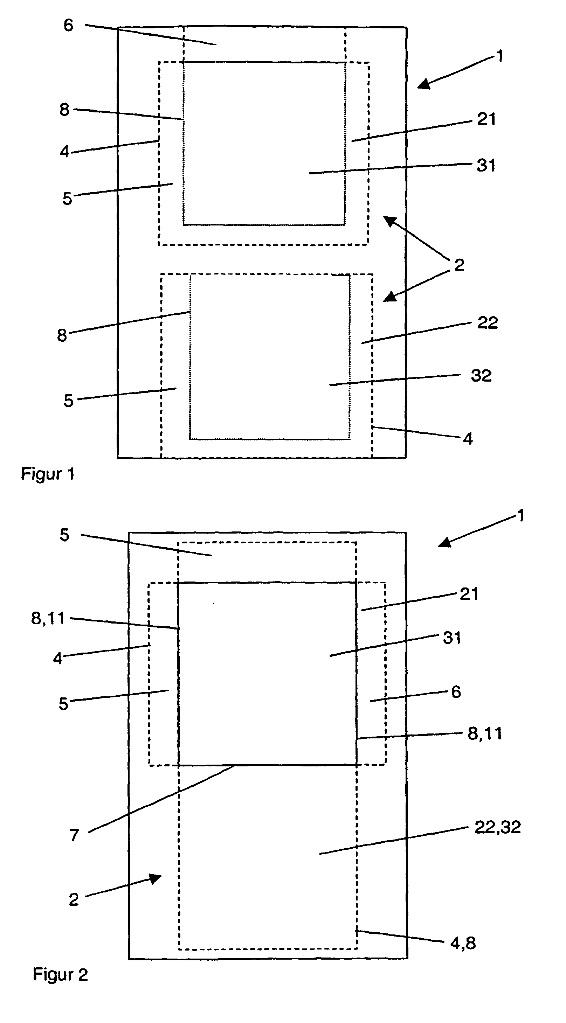

**Figur 1** zeigt, als Vergleich, einen Zuschnittbogen, der nicht Gegenstand der vorliegenden Erfindung ist, und der zwei von einander getrennte Zuschnittteile mit Lappen zur ungefalteten Verklebung dreier Seiten der Hauptabschnitte, wobei Perforierungen durch gestrichelte, und die Aussenkanten der Hauptabschnitte durch gepunktete Linien gekennzeichnet sind.
**Figur 2** zeigt, als Vergleich, einen Zuschnittbogen, der nicht Gegenstand der vorliegenden Erfindung ist, und in dem die beiden Zuschnittteile miteinander über eine Faltlinie verbunden sind, und der eine Hauptabschnitt an allen drei Aussenkanten durch Faltlinien (durchgehende Linien) abgetrennte Lappen aufweist.

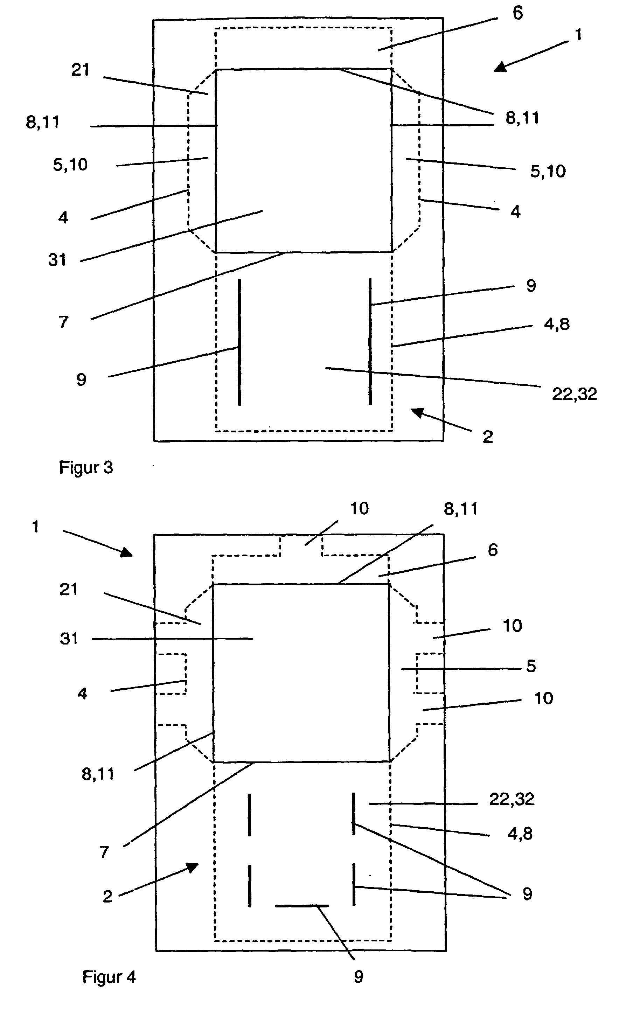

**Figur 3** zeigt einen erfindungsgemässen Zuschnittbogen, in dem die beiden Zuschnittteile miteinander über eine Faltlinie verbunden sind, und in dem der eine Hauptabschnitt an allen drei Aussenkanten durch Faltlinien (durchgehende Linien) abgetrennte Lappen aufweist, wobei zwei der Lappen als Einstecklaschen ausgebildet sind und der zweite Hauptabschnitt Einsteckschlitze (fette Linien) zu deren Aufnahme aufweist.
**Figur 4** zeigt einen Zuschnittbogen ähnlich Figur 3, wobei die Lappen an allen drei Aussenkanten nur zum Teil als Einstecklaschen ausgebildet sind und wobei der zweite Hauptabschnitt Einsteckschlitze (fette Linien) zu deren Aufnahme aufweist.

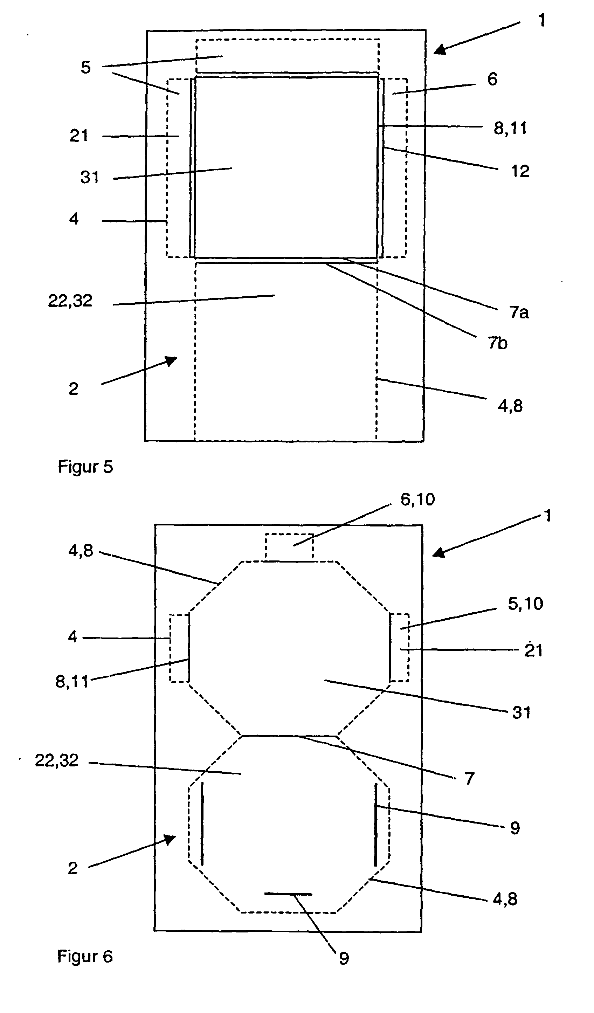

**Figur 5** zeigt an einem Zuschnittbogen Ohne Einstecklaschen und entsprechenden Einsteckschlitzen doppelte Faltlinien zur Herstellung einer Hülle für dicken Inhalt.
**Figur 6** zeigt einen Zuschnittbogen mit miteinander verbundenen Zuschnittteilen und mit achteckigen Hauptabschnitten, wobei ein Hauptabschnitt drei mit Lappen versehene Aussenkanten aufweist, die als Einstecklaschen dienen, und wobei der zweite Hauptabschnitt mit Einstecköffnungen zur Aufnahme der Einstecklaschen versehen ist.

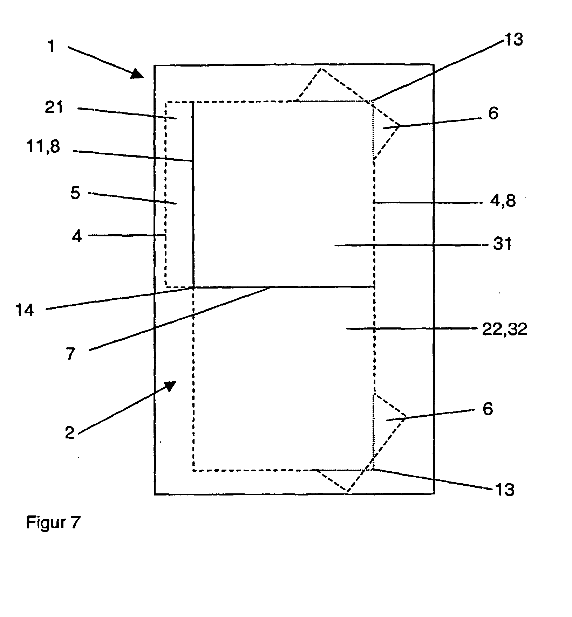

**Figur 7** zeigt an einem Zuschnittbogen ohne Einstecklasche und entsprechenden Einsteckschiltzen und mit im wesentlichen quadratischen Hauptabschnitten eine Ausführungsform mit nur einem Lappen an einer Aussenkante eines Hauptabschnitts und je einem zwei weitere Aussenkanten verbindenden Verschlusslappen auf jedem der beiden Hauptabschnitte.

Wie die Figuren zeigen, ist eine bevorzugte Fläche des Zuschnittbogens 1 ein A4-Format, da dieses Format von den meisten Druckern problemlos verarbeitet wird und, z.B. für CD-Hüllen, einen Zuschnitt 2 resp. zwei zusammen den Zuschnitt 2 ergebende Zuschnittteile 21, 22 pro Bogen zulässt. Neben A4-Format sind aber auch andere, insbesondere andere von Druckern resp. Kopierern verarbeitbare Formate geeignet. In den Figuren sind die Trennlinien 4, insbesondere die Perforation, durch gestrichelte Linien dargestellt, Faltlinien 7, Aussenkanten-Faltlinien 11 und Dicken-Faltlinien 12 mittels durchgehender Linien, Eingriffsöffnungen mittels dicker Linien und nur angedeutete, nicht sichtbare Linien mittels gepunkteter Linien.

In Figur 1 ist zum Vergleich ein Zuschnittbogen 1 dargestellt, der zwei von einander getrennte Zuschnittteile 21,22 aufweist, die zusammen einen Zuschnitt 2 ergeben und wovon jeder Zuschnittteil 21,22 einen Hauptabschnitt 31, 32 identischer Grösse umfasst. Die Zuschnittteile 21, 22 resp. der Zuschnitt 2 sind durch eine Trennlinie 4 im Zuschnittbogen 1 gehalten. Als Trennlinie 4 wird eine Schwächung innerhalb des Zuschnittbogens 1 bezeichnet, die ein Heraustrennen des Zuschnitts 2 aus dem Zuschnittbogen 1 erlaubt. Eine solche Trennlinie 4 kann z.B. eine nicht ausgebrochene Stanzung und/oder eine Stanzung bis auf einen abziehbaren Träger und/oder eine durch Hitzeeinwirkung hergestellte Sollbruchstelle sein, insbesondere aber eine Perforation. An drei resp. vier der Aussenkante 8 der Hauptabschnitte 31, 32 sind diese durch Lappen 5, resp. Verschlusslappen 6 vergrössert, wobei durch Zusammenkleben der Lappen 5, die drei Kanten jedes Hauptabschnittes umschliessen, eine Hülle erzeugt wird, die durch den Verschlusslappen 6 an der vierten Seite, vorzugsweise mittels einer wieder lösbaren Klebeverbindung oder mittels Einstecklasche (in Figur 1 nicht gezeigt) verschlossen werden kann.

Aufgrund des einfacheren Zusammenfügens ist es bevorzugt, dass die zwei an der Trennlinie 4 heraustrennbaren Zuschnittteile 21,22, die zusammen den heraustrennbaren Zuschnitt 2 ergeben, über eine Faltlinie 7 zwischen den beiden Hauptabschnitten bereits fest miteinander verbunden sind, so dass durch blosse Faltung an der Faltlinie 7 die Vorderseite und die Rückseite der Hülle gebildet werden, die nur noch an so vielen der Aussenkanten 8 der Hauptabschnitte 31, 32 miteinander verbunden werden müssen, dass dadurch eine Hülle gebildet wird, die den Datenträger in vorzugsweise drei Richtungen hält (siehe Figuren 2 bis 7).

Die Faltlinie 7 zwischen den beiden Hauptabschnitten 31, 32 muss nicht speziell markiert sein, um die korrekte Faltung zu erleichtern ist eine Markierung aber bevorzugt. Diese Markierung kann eine Farbmarkierung und/oder eine die Faltung erleichternde Blindprägung oder Rillung mit oder ohne Vorbrechung sein oder gegebenenfalls eine Teilstanzung, wobei eine Blindprägung resp. Rillung bevorzugt ist, da sie einerseits die korrekte Faltung erleichtern und nicht nur deren Ort angeben wie eine blosse Farbmarkierung, und da sie andererseits das Material an der Faltung nicht schwächen, wie es bei der Teilstanzung der Fall ist.

Eine mechanische Erleichterung der Faltung, insbesondere eine Blindprägung oder Rillung mit oder ohne Vorbrechung, ist insbesondere stark bevorzugt, wenn sich das Material des Zuschnittbogens 1 resp. des Zuschnitts 2 sonst nicht gut falten lässt, z.B. wegen zu grosser Dikke, Brüchigkeit oder zu hoher Elastizität.

Als Materialien für den Zuschnittbogen 1 resp. Zuschnitt 2 grundsätzlich geeignet sind alle mindestens einseitig bedruck- resp. beschriftbaren Materialien, wie Papier, Karton, Kunststoffolien, aber auch Laminate, insbesondere Laminate, die mindestens einseitig eine Schicht aus Papier, Karton oder Kunststoff aufweisen, sowie Schichtmaterialien mit einer vom Zuschnitt trennbaren, z.B. abziehbaren, Schicht. Diese Materialien können pigmentiert oder unpigmentiert, weiss oder farbig, opak oder - sofern es das Material, insbesondere der Kunststoff, zulässt - transparent sein.

Für das Verbinden der Hauptabschnitte 31, 32 nach Faltung an der Faltlinie 7 ist das Vorhandensein von mindestens einem zur Verbindung mit dem zweiten Hauptabschnitt 32 bestimmten Lappen 5 an mindestens einer Aussenkante 8 des Hauptabschnitts 31 wesentlich. (Als Aussenkante 8 wird im Rahmen dieser Erfindung jeder Rand eines Hauptabschnitts 31, 32 bezeichnet, an dem dieser Hauptabschnitt 31, 32 nicht direkt oder indirekt in den zweiten Hauptabschnitt 32,31 übergeht. Der Übergang von einem Hauptabschnitt 31, 32 in den andern wird im Rahmen dieser Erfindung allgemein als Faltlinie 7 bezeichnet.)

Vorzugsweise sind mindestens zwei der Aüssenkanten 8 mindestens eines und bevorzugt eines Hauptabschnitts 31 mit Lappen 5 und gegebenenfalls Verschlusslappen 6 versehen. Solche Lappen 5 können einerseits einem Verbinden der beiden Hauptabschnitte 31, 32 durch Kleben (Figur 2) dienen, erfindungsgemäss ist aber mindestens einer der Lappen 5 oder Verschluss lappen 6 an mindestens einer Aussenkante 8 mindestens eines ersten Hauptalschnitts 31 mindentens teilweise als Einstecklasche 10 ausgebildet die zum Verbinden der beiden Hauptabschnitte 31, 32 in eine Eingriffsöffnung 9 im zweiten Hauptabschnitt 32, wie einen Schlitz, eingreift (Figuren 3 - 7). Erfindungsgemäss sind einer oder mehrere der Lappen 5 selbst (Figur 3) oder jeweils einer oder mehrere Teile eines Lappen 5 (Figur 4) als Eingriffslaschen 10 ausgebildet.

Vorzugsweise ergeben die Lappen 5 an beiden Hauptabschnitten 31, 32 zusammen, vorzugsweise nur an einem Hauptabschnitt 31, nach Faltung und Befestigung eine Tüte, die den Datenträger in drei Richtungen hält, nicht aber in der vierten Richtung. Bei einer viereckigen Hülle, wie sie mittels der Zuschnittbogen 1 erhältlich ist, die in den Figuren 1 bis 5 dargestellt sind, verbinden die Lappen 5 vorzugsweise jeweils zwei Aussenkanten 8 der Hauptabschnitte 31, 32 (Figuren 2-5), bei einem aus zwei getrennten Zuschnittteilen 21, 22 bestehenden Zuschnitt 2 (Figur 1) jeweils drei Aussenkanten, so dass eine auf drei Seiten verbundene Tüte entsteht, resp. gebildet werden kann.

Vorzugsweise weist der Zuschnitt 2 mindestens einen Verschlusslappen 6 an einer weiteren Aussenkante 8 mindestens eines Hauptabschnittes 31 auf, der den Datenträger nach dessen Einführen in die Hülle in der vierten Richtung festhält. Dieser Verschlusslappen 6 kann entweder nach Faltung am zweiten Hauptabschnitt 32 festgeklebt werden oder, falls der zweite Hauptabschnitt 32 ebenfalls einen Verschlusslappen 6 aufweist, gegebenenfalls ohne Faltung mit diesem Verschlusslappen 6 am zweiten Hauptabschnitt 32 verklebt werden, oder der eine Verschlusslappen 6 kann als Einstecklasche 10 ausgebildet sein oder einen als Einstecklasche 10 ausgebildeten Teil aufweisen, die in eine Eingriffsöffnung 9, insbesondere in einen Eingriffsschlitz, im zweiten Hauptabschnitt 32 oder in einem Verschlusslappen 6 an diesem zweiten Hauptabschnitt 32 eingreifen kann. Bei einer Klebung zum Festhalten in vierter Richtung ist die Verwendung eines wieder lösbaren Klebers bevorzugt.

Auch bei einem Zuschnitt 2 mit in etwa quadratischen Hauptabschnitten 31, 32 kann eine Ausführungsform vorgesehen werden, in der die Hauptabschnitte 31, 32 über jeweils zwei benachbarte Aussenkanten 8 resp. eine Aussenkante 8 benachbart zur Faltlinie 7 miteinander verbunden sind (Figur 7). Bei dieser Ausführungsform ist es bevorzugt, dass ein oder zwei Verschlussmittel, z.B. ein Verschlusslappen 6 im Bereich einer ersten Ecke 13 (mittels gepunkteter Linie angedeutet) vorgesehen sind, wobei diese erste Ecke 13 einer zweiten Ecke 14 gegenüber liegt, und wobei diese zweite Ecke 14 zwischen den verbundenen Aussenkanten 8 resp. der eine Aussenkante 8 und der Faltlinie 7 angeordnet ist. Dieser mindestens eine Verschlusslappen 6 muss derart sein, dass dadurch Bereiche beider an die erste Ecke 13 angrenzender Aussenkanten 8 ausreichend verschlossen werden, um den Datenträger einzuschliessen.

Würden Lappen 5 oder Verschlusslappen 6 fehlen, so könnte die Hülle lediglich mittels aussen angebrachten Klebebandes hergestellt resp. verschlossen werden; was ästhetisch oft unbefriedigend ist und zudem die Wahrscheinlichkeit erhöht, dass der Datenträger mit dem Klebstoff in Kontakt kommt und zumindest im Randbereich verschmutzt wird. Diese Gefahr ist insbesondere vorhanden, wenn die beiden Hauptabschnitte 31, 32 zu wenig schlüssig verklebt werden.

Während es in Abweichung vor der vorliegenden Erfindung, möglich ist, den Zuschnitt 2 derart zu gestalten, dass keine Faltungen notwendig sind (Figur 1), oder nur eine Faltung zwischen miteinander verbundenen Hauptabschnitten 31, 32, wobei die Verbindung weiterer Aussenkanten 8 der Hauptabschnitte 31, 32 durch ineinander Eingreifen oder miteinander Verkleben oder Zusammenklammern von an diesen Aussenkanten 8 vorhandenen Lappen 5 geschieht, ist es erfindungsgemäss bevorzugt, dass an mindestens einem Hauptabschnitt 31, 32 Lappen 5 vorhanden sind, die nach Faltung am anderen Hauptabschnitt 32, 31 befestigt werden. Zur Erleichterung dieses Faltens ist es vorteilhaft, wenn mindestens ein, vorzugsweise alle Lappen 5 vom Hauptabschnitt 31, 32 durch eine Aussenkanten-Faltlinie 11 getrennt sind, wobei diese Aussenkanten-Faltlinie eine Farbmarkierung und/oder eine Blindprägung oder Rillung (mit/ohne Vorbrechung) oder eine Teilstanzung sein kann, wobei das Vorhandensein einer Blindprägung oder Rillung aus den bereits oben zur Faltlinie 7 angeführten Gründen bevorzugt ist. Speziell bevorzugt ist es, wenn bei einer für Faltung vorgesehenen Ausführungsform alle Lappen 5 und Verschlusslappen 6 am gleichen Hauptabschnitt 31 sitzen, da derart eine volle Fläche zur Gestaltung mittels z.B. Ink-Jet-Drucker frei bleibt. Falls die Aussenkanten-Faltlinie 11 - was von der vorliegenden Erfindung ebenfalls erfasst ist - eine Perforation ist, können auch weitere Lappen 5 und gegebenenfalls Verschlusslappen 6 vorgesehen werden, die vom Hersteller der Hülle dann je nach Bedarf verwendet oder entfernt werden können.

Da erfindungsgemäss mindestens eine Verbindung der Hauptabschnitte 31, 32 an einer oder mehreren Aussenkanten 8 nicht durch Kleben oder Klammern sondern durch Eingreifen erzielt werden soll, sind mindestens ein Lappen 5 an mindestens einer Aussenkante 8 des einen Hauptabschnitts 31 mindestens teilweise als Einstecklaschen 10 ausgebildet (Figuren 3, 4 und 6). In einer solchen Ausführungsform sind im anderen Hauptabschnitt 32 Einstecköffnungen 9, üblicherweise Einsteckschlitze, zur Aufnahme der Einstecklaschen 10 vorgesehen, derart, dass die Einstecklaschen 10 nach Heraustrennen des Zuschnitts 2 und Faltung desselben in diese Einstecköffnungen 9 eingreifen können. Neben Einstecköffnungen 9, insbesondere Einsteckschlitzen, können im Zuschnittbogen 1 auch Schlitzvorläufer, wie von Hand durchdrückbare Perforierungen und Teilstanzungen, vorgesehen sein.

Falls eine Hülle auch zur Aufnahme dickerer oder gegebenenfalls mehrerer Datenträger gleichzeitig geeignet sein soll, so können die Lappen 5 und Verschlusslappen 6 zusätzlich mit einer Dicken-Faltlinie 12, vorzugsweise einer Blindprägung oder Rillung, versehen werden, wobei sich diese Dicken-Faltlinie 12 in einem Abstand von der Aussenkante 8 eines Hauptabschnitts 31, resp. einer Aussenkanten-Faltlinie 11 befindet, welcher der Ausdehnung der Schmalseite der Hülle entspricht. In einer solchen Ausführungsform ist bei zwei miteinander verbundenen Hauptabschnitten ebenfalls eine doppelte Faltlinie 7 vorzusehen, wobei der Abstand zwischen den Faltlinien 7a und 7b gleich dem Abstand zwischen Aussenkanten-Faltlinie 11 und Dicken-Faltlinie 12 ist.

Die Hauptabschnitte können diverse Formen aufweisen, solange diese die sichere Aufnahme und den Schutz digitaler Datenträger wie Floppy-Discs (FDs) und insbesondere Compact-Discs (CDs) oder ähnlich gestaltete Datenträger wie DVDs ermöglichen. Obschon runde - oder mit Ausnahme der die Faltlinie 7 bildenden resp. mit Lappen 5, 6 versehenen Stellen runde - Ausführungsformen der Hauptabschnitte 31, 32 möglich sind, sind im wesentlichen regelmässige Vielecke, wie Sechsecke, Achtecke und insbesondere Vierecke, bevorzugt. Bei diesen Vielecken ist es gut möglich und bevorzugt, dass die beiden Hauptabschnitte 31, 32 über mindestens eine Faltlinie 7, miteinander verbunden sind. Ferner kann z.B. bei Sechsecken oder Achtecken (siehe Figur 6) nur ein Teil der Aussenkanten 8 mit Lappen 5 versehen werden, wobei ein Verschluss aller Kanten mittels umgefalteter Lappen 5 aus Gründen des Schutzes vor Verschmutzung bevorzugt ist.

Neben oder anstelle einer Verbindung der beiden Hauptabschnitte 31, 32 mittels Einstecklaschen 10 und dazu korrespondierender Einstecköffnungen 9, kann - wie bereits erwähnt - eine Verbindung auch mittels Kleben erzielt werden. Dafür werden an mindestens einem der Hauptabschnitte 31 Lappen 5 vorgesehen, wobei an einem oder mehreren Lappen 5 zusätzlich Klebemittel vorgesehen sein können, z.B. nach Druckbeaufschlagung haftende Klebstoffe, die mittels einer abziehbaren Folie, die sich mindestens über den Bereich dieser Klebemittel erstreckt, vor einem vorzeitigen Kleben geschützt sind. Andere geeignete Klebemittel sind z.B. thermisch aktivierbare oder thermoreaktive Kleber, die beispielsweise mittels Haartrockner oder Bügeleisen aktiviert resp. zur Reaktion gebracht werden können.

In Anbetracht der diversen, für den Zuschnittbogen geeigneten Materialien, z. B. Laminaten, kann es vorteilhaft oder sogar notwendig sein, die Haftung des Klebstoffs durch Aufbringen einer die Haftung verbessernden Schicht auf wenigstens einer in Kontakt mit dem Klebstoff stehenden oder in Kontakt mit dem Klebstoff kommenden Seite zu verbessern.

Ein Klebemittelauftrag erfolgt vorzugsweise, aber nicht zwingend, auf der nicht für die Bedruckung und/oder Beschriftung vorgesehenen Seite des Zuschnittbogens im Bereich der Lappen 5.

In gewissen Fällen kann es bevorzugt sein zumindest einzelne für die Verbindung der beiden Hauptabschnitte 31, 32 vorgesehene Lappen 5 und gegebenenfalls Verschlusslappen 6 nicht vorab mit Klebemittel zu versehen. In einem solchen Fall kann ein Set umfassend mindestens einen erfindungsgemässen Zuschnittbogen 1 und mindestens ein Klebemittel bereitgestellt werden. Ein solches Set ermöglicht die Verwendung einer grösseren Vielzahl von Klebemitteln, wie doppelseitig klebende Bänder, Ein- und Zweikomponenten-Klebstoffe, insbesondere feuchtigkeitshärtende oder hitzeaktivierbare Einkomponenten-Klebstoffe, speziell bevorzugt rasch, d.h. innerhalb von wenigen Sekunden bis wenigen Minuten, härtende Ein- und Zweikomponenten-Klebstoffe, wieder lösbare und gegebenenfalls mehrfach klebende Klebstoffe und Kombinationen derselben, wie doppelseitig klebendes Band für ein wieder lösbares Verschliessen und ein rasch härtender Klebstoff für dauerhaftes Verbinden der die Tüte bildenden Seiten.

Die Herstellung eines erfindungsgemässen Zuschnittbogens 1 kann auf verschiedene Arten erfolgen, wobei jeder Zuschnittbogen 1 vorzugsweise mindestens einen Zuschnitt 2 resp. mindestens zwei einen Zuschnitt 2 bildende Zuschnittteile 21, 22 aufweist, die durch die Trennlinie 4 im Zuschnittbogen 1 gehalten werden.

Einerseits kann das Material für den Zuschnittbogen 1 in Rollenform (Rollenmaterial) erst mit den Trennlinien 4, insbesondere der Perforation, für den Zuschnitt 2, und dann - falls gewünscht - mit den Faltlinien 7, Aussenkanten-Faltlinien 11 und Dickenfaltlinien 12 versehen werden, worauf die Trennung in die einzelnen Bogen erfolgt.

Es ist auch möglich das Rollenmaterial erst mit Faltlinien 7, Aussenkanten-Faltlinien 11 und Dickenfaltlinien 12 zu versehen und dann mit den Trennlinien 4, insbesondere der Perforation für den Zuschnitt 2, worauf die Trennung in die einzelnen Bogen erfolgt.

Es ist ferner möglich erst das Rollenmaterial in die einzelnen Bogen zu zerlegen und dann die einzelnen Bogen erst mit den Trennlinien 4, insbesondere der Perforation für den Zuschnitt 2, und dann- falls gewünscht - mit den Faltlinien 7, Aussenkanten-Faltlinien 11 und Dikkenfaltlinien 12 zu versehen.

Eine weitere Möglichkeit besteht darin, das in Bogen aufgetrennte Rollenmaterial erst mit Faltlinien 7, Aussenkanten-Faltlinien 11 und Dickenfaltlinien 12 zu versehen und anschliessend mit den Trennlinien 4, insbesondere der Perforation.

Alle diese Verfahrensschritte können in einer oder mehreren Maschinen durchgeführt werden.

Die Trennlinie, insbesondere die Perforation, kann mit bekannten Verfahren, z.B. mechanisch, insbesondere mit Perforiermesser, oder durch Laserperforierung, erzeugt werden und die Faltlinie 7, Aussenkanten-Faltlinien 11 und Dickenfaltlinien 12, werden vorzugsweise als Blindprägungen und/oder Rillungen, gegebenenfalls mit Vorbrechung und/oder mit zusätzlicher visueller Markierung, ausgeführt. Eine visuelle Markierung kann auch zur besseren Sichtbarmachung der Perforation eingesetzt werden.

In einer zusätzlichen, an beliebiger Stelle innerhalb eines der oben beschriebenen Verfahren aber vorzugsweise an deren Ende resp., bei der Bearbeitung von Rollenmaterial, vor dessen Auftrennung in Zuschnittbogen 1, durchzuführenden Stufe des Herstellungsverfahrens kann der Zuschnitt 2 mindestens auf einem Lappen 5 und/oder auf mindestens einem Verschlusslappen 6 oder auf mindestens einem der Hauptabschnitte 31 in mindestens einem Bereich, der nach Heraustrennen und Faltung des Zuschnitts 2 in Kontakt mit einem Lappen 5 oder einem Verschlusslappen 6 kommt, mit einem Klebemittel versehen werden.

Mittels eines erfindungsgemässen Zuschnittbogens 1 kann eine Vorstufe zu einer individualisierten Hülle derart hergestellt werden, dass dieser Zuschnittbogen in einem für die Verarbeitung resp. den Transfer digitaler Daten geeigneten Drucker, insbesondere einem Ink-jet-Drucker, oder einem analog oder digital arbeitenden Kopierer oder einer analog oder digital arbeitenden Druckmaschine bedruckt wird. Alternativ oder zusätzlich kann der Zuschnittbogen 1 auch in einem analog oder digital arbeitenden, schwarz-weiss oder farbig druckenden Kopierer bedruckt und/oder von Hand gestaltet werden.

In einem weiteren Schritt wird dann der Zuschnitt 2 an der Trennlinie 4, insbesondere der Perforation aus dem bedruckten Zuschnittbogen 1 herausgetrennt, worauf dessen beiden Hauptabschnitte 21, 22, gegebenenfalls nach Faltung, an mindestens einer Aussenkante 8 miteinander verbunden werden.

## Patentansprüche

1. Zuschnittbogen (1), der mittels eines für den Transfer digitaler Daten geeigneten Druckers oder mittels eines Kopierers individuell bedruck- und beschriftbar ist, wobei dieser eine für den gewählten Drucker verarbeitbare Fläche und mindestens zwei von Hand heraustrennbare Zuschnittteile (21, 22) mit je einem Hauptabschnitt (31, 32) aufweist, wobei die Zuschnittteile (21, 22) mittels einer Trennlinie (4) insbesondere einer Perforation, heraustrennbar im Zuschnittbogen (1) gehalten werden und wobei jeweils zwei Zuschnittteile (21, 22) miteinander einen heraustrennbaren Zuschnitt (2) ergeben und wobei beide Hauptabschnitte (31, 32) im wesentlichen gleich gross sind und jeder der Hauptabschnitte (31, 32). mindestens die für eine Seite der Hülle für digitale Datenträger erforderlichen Masse aufweist, und wobei die zwei heraustrennbaren Zuschnittteile (21, 22), die einen heraustrennbaren Zuschnitt (2) ergeben, über mindestens eine Faltlinie (7). zwischen den beiden Hauptabschnitten (31, 32) miteinanderverbunden sind, und wobei mindestens ein erster Hauptabschnitt (31) an mindestens einer Aussenkante (8) mindestens einen zur Verbindung mit dem zweiten Hauptabschnitt (32) bestimmten Lappen (5) und/oder Verschlusslappen (6) aufweist, **dadurch gekennzeichnet, dass** mindestens einer der Lappen (5) oder Verschlusslappen (6) an mindestens einer Aussenkante (8) mindestens eines ersten Hauptabschnitts (31) mindestens teilweise als Einstecklasche (10) ausgebildet ist und dass der zweite Hauptabschnitt (32) mindestens einen zur Aufnahme der Einstecklasche (10) dienenden Einsteckschlitz (9) oder eine die werkzeuglose Herstellung eines Einsteckschlitzes (9) ermöglichende Perforation aufweist.

2. Zuschnittbogen (1) gemäss Anspruch 1, **dadurch gekennzeichnet, dass** die zwei heraustrennbaren Zuschnittteile (21, 22), die einen heraustrennbaren Zuschnitt (2) ergeben, über mindestens eine Faltlinie (7) zwischen den beiden Hauptabschnitten (31, 32) miteinander untrennbar verbunden sind.

3. Zuschnittbogen (1) gemäss Anspruch 1 oder 2, **dadurch gekennzeichnet, dass** die zwei heraustrennbaren Zuschnittteile (21, 22), die einen heraustrennbaren Zuschnitt (2) ergeben, über genau eine Faltlinie (7) zwischen den beiden Hauptabschnitten (31, 32) miteinander verbunden sind.

4. Zuschnittbogen (1) gemäss einem der Ansprüche 1 bis 3, **dadurch gekennzeichnet, dass** die Faltlinie (7) zwischen den beiden Hauptabschnitten (31, 32) eine Farbmarkierung und/oder eine Blindprägung oder Rillung oder Teilstanzung ist.

5. Zuschnittbogen (1) gemäss Anspruch 4, **dadurch gekennzeichnet, dass** die Faltlinie (7) zwischen den beiden Hauptabschnitten (31, 32) eine Blindprägung oder Rillung ist.

6. Zuschnittbogen (1) gemäss einem der Ansprüche 1 bis 5, **dadurch gekennzeichnet, dass** mindestens ein Lappen (5) und/oder Verschlusslappen (6) vom Hauptabschnitt(3) durch eine Aussenkanten-Faltlinie (11) getrennt sind, wobei diese Aussenkanten-Faltlinie (11) eine Farbmarkierung und/oder eine Blindprägung oder Rillung oder Teilstanzung ist.

7. Zuschnittbogen (1) gemäss Anspruch 6, **dadurch gekennzeichnet, dass** alle Lappen (5) und/oder Verschlusslappen (6) vom Hauptabschnitt(3) durch eine Aussenkanten-Faltlinie (11) getrennt sind.

8. Zuschnittbogen (1) gemäss Anspruch 6 oder 7, **dadurch gekennzeichnet, dass** die Aussenkanten-Faltlinie (11) eine Blindprägung oder Rillung ist.

9. Zuschnittbogen (1) gemäss irgendeinem der vorangehenden Ansprüche, **dadurch gekennzeichnet, dass** die beiden Hauptabschnitte (31, 32) miteinander über eine Kante verbundene Vielecke sind.

10. Zuschnittbogen (1) gemäss Anspruch 9, **dadurch gekennzeichnet, dass** die Hauptabschnitte (31, 32) zwei über eine Kante verbundene im wesentlichen quadratische Vierecke sind.

11. Zuschnittbogen (1) gemäss einem der vorangehenden Ansprüche, **dadurch gekennzeichnet, dass** er auf mindestens einem Zuschnittteil (21, 22), insbesondere an mindestens einem Lappen (5) und/oder Verschlusslappen (6), vorzugsweise auf der nicht für die Bedruckung und/oder Beschriftung vorgesehenen Seite, ein Klebemittel aufweist.

12. Zuschnittbogen (1) gemäss Anspruch 11, **dadurch gekennzeichnet, dass** das Klebemittel ausgewählt ist aus der Gruppe umfassend durch Druckbeaufschlagung haftende Klebstoffe, thermisch aktivierbare Klebstoffe, thermoreaktive Klebstoffe und Mischungen derselben.

13. Set für die Herstellung einer Hülle umfassend mindestens einen Zuschnittbogen (1) gemäss einem der vorangehenden Ansprüche und mindestens ein Klebemittel.

14. Set gemäss Anspruch 13, **dadurch gekennzeichnet, dass** das Klebemittel ausgewählt ist aus der Gruppe umfassend doppelseitig klebende Bänder, Einund Zweikomponenten-Klebstoffe, insbesondere rasch härtende 1-Komponenten-Kebstoffe, wieder lösbare und gegebenenfalls mehrfach klebende Klebstoffe und Kombinationen derselben.

15. Verfahren zur Herstellung einer Vorstufe einer Hülle, **dadurch gekennzeichnet, dass** ein Zuschnittbogen (1) gemäss einem der Ansprüche 1 bis 12 in einem für den Transfer digitaler Daten geeigneten Drucker oder einem Kopierer oder einer Druckmaschine, insbesondere einem Ink-jet-Drucker, bedruckt wird.

16. Verfahren gemäss Anspruch 15, **dadurch gekennzeichnet, dass** der Zuschnitt (2) an der Trennlinie (4), insbesondere der Perforation, aus dem bedruckten Zuschnittbogen (1) herausgetrennt und die beiden Hauptabschnitte (3), gegebenenfalls nach Faltung, an mindestens einer Aussenkante (8) miteinander verbunden werden.

17. Verwendung eines Zuschnittbogens (1) gemäss irgendeinem der Ansprüche 1 bis 12 zum Bedrucken mittels einem für den Transfer digitaler Daten geeigneten Drucker, insbesondere einem Ink-jet-Drucker.

## Claims

1. Blank sheet (1) which is individually printable and inscribable by a printer or a copy machine suitable for the transfer of digital data, whereby it has an area processable for the selected printer and at least two manually detachable blank parts (21, 22), each with a main portion (31, 32), whereby the blank parts (21, 22) are detachably held in the blank sheet (1) by a separation line (4), in particular a perforation, and whereby any two blank parts (21, 22) add up together to a detachable blank (2) and whereby both main portions (31, 34) are of substantially the same size and each of the main portions (31, 32) has at least the dimensions needed for one side of the cover for digital data carriers, and whereby the two detachable blank parts (21, 22) which add up together to a detachable blank (2) are interconnected by at least one folding line (7) between the two main portions (31, 32), and whereby at least one main portion (31) includes at least at one outer edge (8) a flap (5) and/or closure flap (6) adapted for a connection to the second main portion (32), **characterised in that** at least one of the flaps (5) or closure flaps (6) at at least one outer edge (8) of at least one first main portion (31) is at least in part designed as insertion flap (10) and the second main portion (32) includes at least one insertion slot (9) for the receipt of the insertion flap (10) or a perforation allowing the tool-less production of an insertion slot (9).

2. Blank sheet (1) according to claim 1, **characterised in that** the two detachable blank parts (21, 22) which add up to a detachable blank (2) are unseparably interconnected between the two main portions (31, 32) by a folding line (7).

3. Blank sheet (1) according to claim 1 or 2, **characterised in that** the two detachable blank parts (21, 22) which add up to a detachable blank (2) are interconnected between the two main portions (31, 32) by exactly one folding line (7).

4. Blank sheet (1) according to one of the claims 1 to 3, **characterised in that** the folding line (7) between the two main portions (31, 32) is a colour marking and/or a blind embossment or a crease/groove or a partial punching.

5. Blank sheet (1) according to claim 4, **characterised in that** the folding line (7) between the two main portions (31, 32) is a blind embossment or a crease/groove.

6. Blank sheet (1) according to one of the claims 1 to 5, **characterised in that** at least one flap (5) and/or closure flap (6) is separated from the main portion (3) by an outer edge folding line (11), whereby this outer edge folding line (11) is a colour marking and/or a blind embossment or a crease/groove or a partial punching.

7. Blank sheet (1) according to claim 6, **characterised in that** all flaps (5) and/or closure flaps (6) are separated from the main portion (3) by an outer edge folding line.

8. Blank sheet (1) according to claim 6 or 7, **characterised in that** the outer edge folding line (11)is a blind embossment or a crease/groove.

9. Blank sheet (1) according to anyone of the preceding claims, **characterised in that** the two main portions (31, 32) are polygons interconnected across an edge.

10. Blank sheet (1) according to claim 9, **characterised in that** the main portions (31, 32) are substantially quadrate squares interconnected across an edge.

11. Blank sheet (1) according to one of the preceding claims, **characterised in that** it comprises an adhesive on at least one blank part (21, 22) in particular on at least one flap (5) and/or closure flap (6), preferably on the side not intended for the printing and/or inscribing.

12. Blank sheet (1) according to claim 11, **characterised in that** the adhesive is selected from the group encompassing pressure sensitive adhesives, thermically activatable adhesives, thermo-reactive adhesives and mixtures thereof.

13. Set for the production of a cover, comprising at least one blank sheet (1) according to one of the preceding claims and at least one adhesive.

14. Set according to claim 13, **characterised in that** the adhesive is selected from the group encompassing double sided adhesive tapes, one component or two component adhesives, in particular fast setting 1-component adhesives, re-detachable and possibly multiply bonding adhesives and combinations thereof.

15. Method for the production of a precursor of a cover, **characterised in that** a blank sheet (1) according to one of the claims 1 to 12 is printed in a printer suitable for the transfer of digital data or in a copying apparatus or a printing apparatus, in particular an ink-jet-printer.

16. Method according to claim 15, **characterised in that** the blank (2) is detached from the blank sheet (1) at the separating line (4), in particular the perforation, and the two main portions (3) are connected together, possibly after a folding, at at least one outer edge.

17. Use of a blank sheet (1) according to one of the claims 1 to 12 for a printing by a printer suitable to the transfer of digital data, in particular an ink-jet-printer.

## Revendications

1. Feuille à découpes (1) sur laquelle peuvent être appliquées individuellement des impressions ou des inscriptions au moyen d'une imprimante appropriée pour le transfert de données numériques ou au moyen d'une photocopieuse, celle-ci comprenant une surface pouvant être traitée par l'imprimante sélectionnée et au moins deux parties de découpe séparables à la main (21, 22) avec chacune une section principale (31, 32), les parties de découpe (21, 22) étant maintenues de manière séparable dans la feuille à découpes (1) au moyen d'une ligne de séparation (4), en particulier d'une perforation, et deux parties de découpe (21, 22) produisant respectivement ensemble une découpe séparable (2), et les deux sections principales (31, 32) étant sensiblement de même taille et chacune des sections principales (31, 32) présentant au moins les dimensions nécessaires à un côté de la pochette du support de données numériques, et les deux parties de découpe séparables (21, 22), qui produisent une découpe séparable (2), étant reliées l'une à l'autre par l'intermédiaire d'au moins une ligne de pliage (7) entre les deux sections principales (31, 32), et au moins une première section principale (31) au niveau d'au moins un bord extérieur (8) comprenant au moins une patte (5) et/ou une patte de fermeture (6) destinées à assurer la liaison avec la seconde section principale (32), **caractérisée en ce qu'**au moins une des pattes (5) ou pattes de fermeture (6) au niveau d'au moins un bord extérieur (8) d'au moins une première section principale (31), est formée au moins partiellement comme languette d'insertion (10) et **en ce que** la seconde section principale (32) comprend au moins une fente d'insertion (9) servant à recevoir la languette d'insertion (10) ou une perforation permettant la réalisation sans outils d'une fente d'insertion (9).

2. Feuille à découpes (1) selon la revendication 1, **caractérisée en ce que** les deux parties de découpe séparables (21, 22), qui produisent une découpe séparable (2), sont reliées l'une à l'autre de manière inséparable par l'intermédiaire d'au moins une ligne de pliage (7) entre les deux sections principales (31, 32).

3. Feuille à découpes (1) selon la revendication 1 ou 2, **caractérisée en ce que** les deux parties de découpe séparables (21, 22), qui produisent une découpe séparable (2), sont reliées l'une à l'autre par l'intermédiaire d'exactement une ligne de pliage (7) entre les deux sections principales (31, 32).

4. Feuille à découpes (1) selon l'une des revendications 1 à **caractérisée en ce que** la ligne de pliage (7) entre les deux sections principales (31, 32) est un marquage de couleur et/ou une impression en blanc ou un rainurage ou un estampage partiel.

5. Feuille à découpes (1) selon la revendication 4, **caractérisée en ce que** la ligne de pliage (7) entre les deux sections principales (31, 32) est une impression en blanc ou un rainurage.

6. Feuille à découpes (1) selon l'une des revendications 1 à 5, **caractérisée en ce qu'**au moins une patte (5) et/ou une patte de fermeture (6) sont séparées de la section principale (3) par l'intermédiaire d'une ligne de pliage de bord extérieur (11), cette ligne de pliage de bord extérieur (11) étant un marquage de couleur et/ou une impression en blanc ou un rainurage ou un estampage partiel.

7. Feuille à découpes (1) selon la revendication 6, **caractérisée en ce que** toutes tes pattes (5) et/ou pattes de fermeture (6) sont séparées de la section principale (3) par l'intermédiaire d'une ligne de pliage de bord extérieur (11).

8. Feuille à découpes (1) selon la revendication 6 ou 7, **caractérisée en ce que** la ligne de pliage de bord extérieur (11) est une impression en blanc ou un rainurage.

9. Feuille à découpes (1) selon l'une quelconque des revendications précédentes, **caractérisée en ce que** les deux sections principales (31, 32) sont des polygones reliés l'un à l'autre par un bord.

10. Feuille à découpes (1) selon la revendication 9, **caractérisée en ce que** les sections principales (31, 32) sont deux quadrilatères sensiblement carrés reliés par un bord.

11. Feuille à découpes (1) selon l'une des revendications précédentes, **caractérisée en ce qu'**elle présente une colle an moins sur une partie de découpe (21, 22), en particulier au niveau d'au moins une patte (5) et/ou patte de fermeture (6), de préférence sur le côté non prévu pour l'application de l'impression et/ou de l'inscription.

12. Feuille à découpes (1) selon la revendication 11, **caractérisée en ce que** la colle est sélectionnée parmi le groupe comprenant les colles adhérant par injection de pression, les colles activables thermiquement, les colles thermoréactives et les mélanges de celles-ci.

13. Set pour la réalisation d'une pochette composé d'au moins une feuille à découpes (1) selon l'une des revendications précédentes et d'au moins une colle.

14. Set selon la revendication 13, **caractérisé en ce que** la colle est sélectionnée parmi le groupe composé de bandes adhésives double-face, de colles à un et deux composants, en particulier de colles à un composant à durcissement rapide, de colles amovibles et, le cas échéant, pouvant coller plusieurs fois et de combinaisons de celles-ci.

15. Procédé de fabrication d'une première étape d'une pochette, **caractérisé en ce qu'**une feuille à découpes (1) est imprimée selon l'une des revendications 1 à 12 dans une imprimante appropriée pour le transfert de données numériques ou une photocopieuse ou une machine à imprimer, en particulier une imprimante à jet d'encre.

16. Procédé selon la revendication 15, **caractérisé en ce que** la découpe (2) est séparée de la feuille à découpes imprimée (1) au niveau de la ligne de séparation (4), en particulier de la perforation, et que les deux sections principales (3) sont reliées l'une à l'autre, le cas échéant après pliage, au niveau d'au moins un bord extérieur (8).

17. Utilisation d'une feuille à découpes (1) selon l'une quelconque des revendications 1 à 12, pour l'impression au moyen d'une imprimante appropriée pour le transfert de données numériques, en particulier d'une imprimante à jet d'encre.
